# DEMANDE DE BREVET EUROPEEN

(11) **EP 0 568 405 A1**
(43) Date de publication de la demande: **03.11.1993**
(21) Numéro de dépôt: 93400935.8
(22) Date de dépôt: 09.04.1993
(51) Int. Cl.: F16J 1/18

(54) **Procédé d'assemblage d'un piston de moteur à combustion interne avec une bielle**

(30) Priorité: 30.04.1992 FR 9205361
(71) Demandeur: RENAULT AUTOMATION, F-92109 Boulogne-Billancourt (FR)
(72) Inventeur: Videau, Philippe, F-94400 Vitry sur Seine (FR)
(74) Mandataire: Ernst-Schonberg, Michel

(57) **Abrégé**

Procédé d'assemblage d'un pied de bielle (6) sur un piston (5) comportant un alésage (2) d'axe et dont l'axe (1) est immobilisé en translation par deux anneaux d'arrêt (7 et 8) respectivement placés dans deux gorges (9 et 10) usinées à chaque extrêmité de l'alésage (2), caractérisé par le fait que l'un (8) des anneaux d'arrêt est placé de manière extractible dans une gorge d'attente (11) de profondeur inférieure à celle des deux gorges principales (9 et 10) et reçoit une poussée d'extraction communiquée par l'axe qui permet de libérer le passage du pied de bielle à l'intérieur du piston en vue de leur assemblage, avant la mise en place définitive dudit anneau d'arrêt dans la gorge principale (10).

## Description

L'invention concerne un procédé d'assemblage d'un piston de moteur à combustion interne et de sa bielle, plus particulièrement dans le cadre de la simplification des opérations de préparation des sous-ensembles sur les chaînes de production en grande série.

Dans un moteur à combustion interne, le piston est lié à la bielle par un axe traversant le piston et le pied de la bielle. Cet axe est immobilisé en translation dans le piston par deux anneaux d'arrêt respectivement placés dans deux gorges usinées à chaque extrêmité de l'alésage. L'axe, le piston et le pied de bielle sont montés à jeu tournant.

Lors du montage en grande série des moteurs, l'ensemble piston, segmentation et bielle est généralement préparé et pré-assemblé en bord de chaine, manuellement ou automatiquement, puis est introduit dans le bloc-cylindres.

La présente invention a pour objet un procédé d'assemblage d'un piston muni de son axe avec une bielle de façon à simplifier les opérations de préparation et d'assemblage.

Selon l'invention, l'un des anneaux d'arrêt est monté de manière extractible dans une gorge d'attente, de profondeur inférieure à celles des deux gorges principales. Une poussée d'extraction communiquée par l'axe permet de libérer le passage du pied de bielle à l'intérieur du piston en vue de leur assemblage. Cet anneau d'arrêt est ensuite mis en place définitivement dans la gorge principale qui lui est destinée.

Selon l'invention, le piston livré en bord de chaine contient son axe dont le déplacement est évité à une extrêmité par l'un des deux anneaux d'arrêt placé dans sa gorge définitive, et autorisé à l'autre extrêmité par le deuxième anneau d'arrêt placé dans la gorge d'attente.

Plus précisément, l'alésage du piston est muni d'une troisième gorge d'anneau d'arrêt située entre une extêmité de l'alésage de l'axe et la gorge principale d'anneau d'arrêt la plus proche. Cette troisième gorge dite gorge d'attente est de profondeur et de profil tels qu'elle retient statiquement l'anneau d'arrêt, mais il peut en être chassé sans détérioration par une poussée communiquée par l'axe.

Selon le mode de réalisation de l'invention, la poussée communiquée par l'axe est obtenue par un moyen approprié. L'anneau d'arrêt et l'axe de piston s'engagent à l'extrêmité opposée dans un fourreau. Une fois le pied de bielle en place, le fourreau repousse l'axe pour l'amener dans sa position finale,et l'immobilise en translation entre les deux anneaux d'arrêt placés dans leurs gorges définitives.

D'autres caractéristiques et avantages de l'invention ressortiront de la description d'un exemple de réalisation faite en référence aux dessins annexés dans lesquels:
- la figure 1 représente le piston et la bielle assemblés.
- la figure 2 représente le détail d'une gorge principale et d'une gorge d'attente.
- la figure 3 représente le piston, l'axe et les deux anneaux d'arrêt conditionnés pour le stockage.
- La figure 4 représente le piston lors de l'assemblage avec la bielle et l'extraction partielle de l'axe.

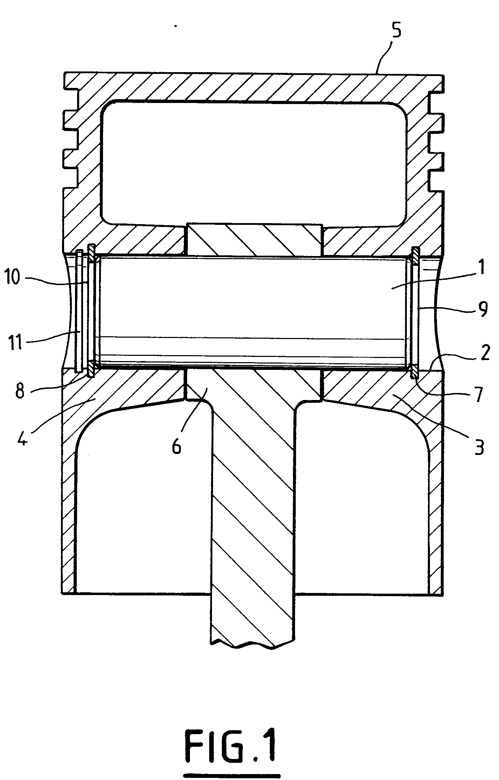

Selon la figure 1, l'axe 1 est monté à jeu tournant dans l'alésage 2 usiné dans les bossages 3 et 4 du piston 5 et dans le pied de bielle 6. L'axe 1 est immobilisé en translation par les deux anneaux d'arrêt 7 et 8 placés dans leurs gorges principales respectives 9 et 10. La gorge d'attente 11 est usinée dans l'alésage 2, entre la gorge principale 10 et l'extrêmité de l'alésage.

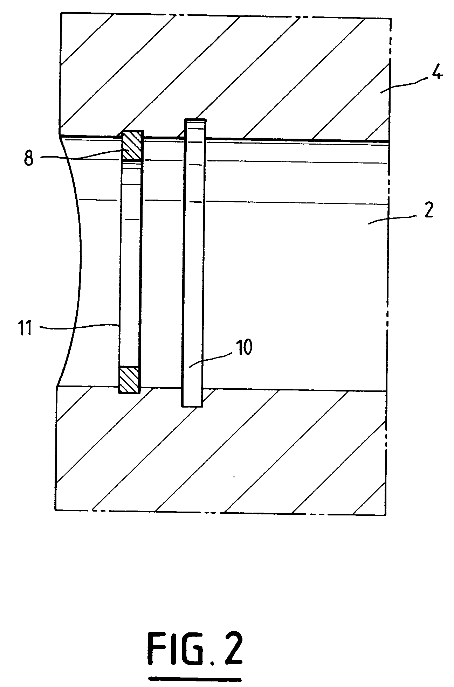

La figure 2 montre la différence de profondeur et de profil de la gorge principale 10 et de la gorge d'attente 11.

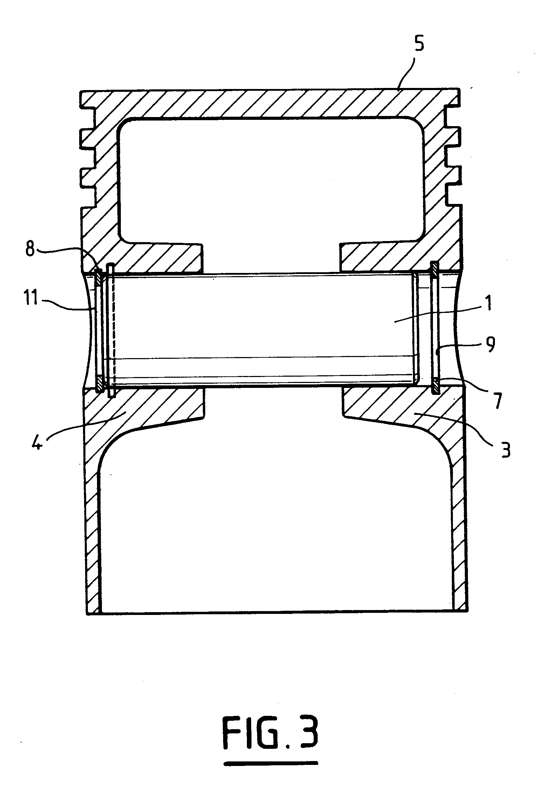

Selon la figure 3, l'axe 1, en position de transport ou de stockage, est maintenu à l'intérieur du piston avec un jeu latéral entre l'anneau d'arrêt 7 monté dans sa gorge définitive 9 d'une part et entre l'anneau d'arrêt 8 monté dans la gorge d'attente 11.

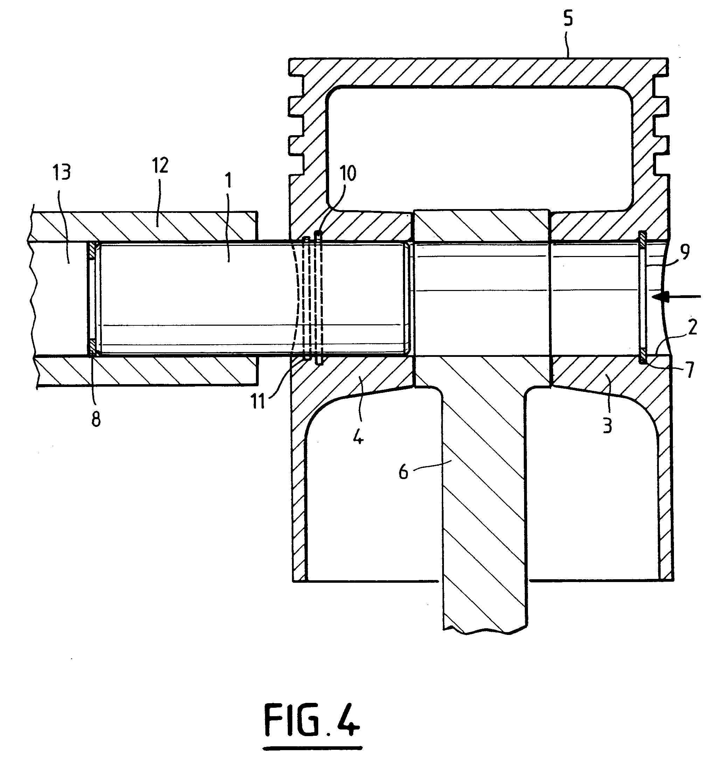

Selon la figure 4, une poussée dans le sens de la flèche chasse l'anneau d'arrêt 8 de la gorge d'attente 11 et fait sortir partiellement du piston l'axe, suffisamment pour libérer le passage du pied de bielle 6 entre les bossages 3 et 4 du piston. L'anneau d'arrêt 7 reste en place. Une poussée sur l'axe, dans le sens inverse de la flèche, au moyen d'un fourreau 12 muni d'un poussoir 13 met l'axe en butée sur l'anneau d'arrêt 7, et permet la mise en place de l'anneau d'arrêt 8 dans la gorge 10.

Bien entendu, l'invention n'est nullement limitée au mode de réalisation décrit et illustré et qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

**1°)** Procédé d'assemblage d'un pied de bielle (6) sur un piston (5) comportant un alésage (2) d'axe et dont l'axe (1) est immobilisé en translation par deux anneaux d'arrêt (7 et 8) respectivement placés dans deux gorges (9 et 10) usinées à chaque extrêmité de l'alésage (2), caractérisé par le fait que l'un (8) des anneaux d'arrêt est placé de manière extractible dans une gorge d'attente (11) de profondeur inférieure à celle des deux gorges principales (9 et 10) et reçoit une poussée d'extraction communiquée par l'axe qui permet de libérer le passage du pied de bielle à l'intérieur du piston en vue de leur assemblage, avant la mise en place définitive dudit anneau d'arrêt dans la gorge principale (10).

**2°)** Ensemble constitué d'un piston, de son axe et de deux anneaux d'arrêt, conforme à la revendication 1, caractérisé par le fait que l'axe de piston (1) est maintenu dans son alésage (2) avant le montage du pied de bielle, pendant le transport et le stockage, par deux anneaux d'arrêt (7 et 8), le premier anneau (7) étant placé dans la gorge définitive (9) et le second anneau étant placé dans sa gorge d'attente (11).

**3°)** Ensemble constitué d'un piston, de son axe et de deux anneaux d'arrêt selon la revendication 2, caractérisé par le fait que l'anneau d'arrêt (8) placé dans la gorge d'attente (11) peut en être chassé sans détérioration par une poussée sur l'extrêmité opposée de l'axe (1).
